# EUROPEAN PATENT SPECIFICATION

(11) **EP 3 194 298 B1**
(45) Date of publication and mention of the grant of the patent: **01.12.2021**
(21) Application number: 15842526.4
(22) Date of filing: 16.09.2015
(51) Int. Cl.: B65D 85/50, B65D 21/032

(54) **SEAFOOD CONTAINER**
MEERESFRÜCHTEBEHÄLTER
RÉCIPIENT DE POISSONS ET FRUITS DE MER

(30) Priority: 17.09.2014 CA 2863692
(43) Date of publication of application: 26.07.2017
(73) Proprietor: 3283688 Nova Scotia Limited, Antigonish, Nova Scotia B2G 2L7 (CA)
(72) Inventor: BOUDREAU, Joseph Edward, Antigonish, Nova Scotia B2G 2L7 (CA)
(74) Representative: Carpmaels & Ransford LLP
(86) International application number: PCT/CA2015/000497
(87) International publication number: WO 2016/041057

(56) References cited:
- EP-A1- 1 743 520
- EP-A2- 1 099 376
- CA-A1- 2 133 000
- CA-A1- 2 133 000
- CA-A1- 2 268 998
- CA-A1- 2 268 998
- CA-A1- 2 620 798
- CA-C- 2 620 798
- KR-A- 20120 008 653
- US-A- 5 632 405
- None

## Description

### Field of the Invention

The present invention relates to a container that facilitates the storage and/or transportation of seafood, such as shellfish. In particular, the present invention relates to a vented container that is capable of immersing the seafood housed therein in water, while also replenishing the ultimately contaminated water with fresh water.

### Background of the Invention

Aquatic animals such as, for example, crustaceans are an important food source. In order to ensure freshness, these seafood products must typically be kept alive until just before they are cooked. This has created a need for efficiently transporting live seafood, as well as for a simple and efficient means for keeping the seafood alive during transportation. In addition, the ability to keep the seafood alive during transportation for longer periods of time would expand the market for the seafood products.

When preservation of live seafood is intended for only a matter of hours, a typical means of transportation known in the art includes boxes or crates filled and/or covered with ice. However, when seafood is to be transported a longer distance it is often necessary to transport the seafood by air, as the seafood will typically not survive long enough in boxes filled and/or covered with ice for ground transportation to be feasible.

Airfreight has been used to transport seafood, as well as fresh produce and other organic food. However, there are several disadvantages associated with air-freighted food. In particular, the cost of packaging, including gel packs, ice, water etc., to keep the product cool, is expensive, and logistics and handling are complex. For example, typically the seafood product has to be loaded onto a truck, airlifted to the desired destination, and then unloaded onto a truck to be delivered to the purchaser, which results in operating costs that can be prohibitively expensive. In addition, air transport is not, at the present time, environmentally friendly due to the amount of packaging used and the amount of fuel necessary to transport relatively low volumes of food.

As an alternative to air-freight, ground and/or sea transportation systems for seafood are also known in the art and usually consist of containers filled with water or seawater that are to be hauled by vehicles, such as that described in e.g. United States Patent No. 3,687,111. The live aquatic animals, which may be transported in such containers, include mollusks, crustaceans, and fishes. The transportation of aquatic animals over long distances poses a significant challenge since, when the animals have been contained in the water for a long period of time, the water will be contaminated by their body wastes, and oxygen in the water depletes over time. Accordingly, the mortality rates can reach very high levels, which decrease the profitability of the venture. In addition, the weight associated with the large amount of water needed to fill such holding tanks can make this mode somewhat impractical.

Another option for ground and/or sea transportation is to store the seafood in boxes or crates in a temperature controlled environment, where the boxes are then sprayed with water, such as in e.g. European Patent Publication No. 0 072 334 or PCT Patent Application No. PCT/CA2008/000269. The water flows through the boxes and over the seafood contained therein, where it is ultimately collected at the bottom of the storage area, filtered and recycled back into the system. The constant flow of fresh water over the seafood product is typically considered an improvement over having the seafood product immersed in a container of water that will eventually become stagnant and contaminated over time.

However, it is thought that spraying the seafood product with water may not be sufficient to properly and fully flush out contaminants and waste products from e.g. the gills of the crustaceans, which may contribute to the finite shelf life and mortality rates of the seafood product when transported using such a system. Full immersion of the seafood product in water is typically believed to more efficiently clear waste products from e.g. crustaceans. Accordingly, a system that accomplishes full immersion of the seafood product to eliminate waste, while also managing to continuously replace the contaminated water with fresh water, would be ideal.

As can be seen in the prior art discussed below, attempts have been made to devise storage and/or transportation containers for shellfish.

United States Patent No. 6,041,931 discloses a lidded container having four side walls and a bottom wall, covered by a hinged two-piece lid. The lid has a series of perforated wells defined by ridges, purposed to receive ice, which when melted, can infiltrate the container and contact the crustaceans contained therein. The endwalls, sidewalls and bottom walls of the container comprises a series of apertures or slots allowing the cooling water to exit the container after having contacted the crustacean and, in cases where containers are stacked, to infiltrate a lower disposed container.

PCT Publication WO 2014/094159 discloses a shellfish storage system comprising waterproof shipping boxes having dividers therein to create compartments. An insert for the top of each box is perforated and acts as a flow distribution plate above packed lobsters and/or other shellfish, to allow water to be distributed over each cell of the divider. A bottom insert is placed under the divider to direct water within the box for drainage, such as through a drainage hole at the bottom of the box.

United States Patent No. 5,632,405 discloses a container for receiving lobsters. The unitary body of the container has slots to allow water to circulate there through and drain therefrom. The lid is buoyant allowing the container to float e.g. alongside a boat.

United States Patent No. 5,555,845 discloses a stackable container having a divider assembly mounted therein. When the containers are filled with lobster and stacked, water is sprayed onto the uppermost container. When the water reaches a certain threshold, it escapes the container through drainage holes on the sides of the container and flows downward into subsequent containers.

French Patent No. 2 801 472 discloses a method of storing prawns and other crustaceans in boxes that are stacked vertically to form a battery. The lids and bottoms of the boxes comprise a series of holes. Cold water is applied to the top of the battery of boxes, where it eventually moves through each of the boxes to reach all of the seafood.

KR 2012 0008653 A relates to a transporting box for live fish and shellfish which consists of generally a body, an air supply outlet and a drainpipe arranged in one side of the top side of the body. The drainpipe is disposed at one side of the upper surface of the body and is configured to discharge water when the pressure of oxygen supplied through the air supply mechanism is increased to the inside of the sealed body after the water and the live fishery products are introduced, therefore preventing further leakage due to the oxygen pressure rising or damage. To achieve this, one end of the drainpipe is exposed to the outside of the body, and the other end of the drainpipe is sufficiently submerged in the water. The upper outlet is sealed by a stopper so that water no longer leaks out of the body after the oxygen is sufficiently introduced into the body.

### Summary of the Invention

An aspect of the present invention provides a seafood storage and/or transportation container according to claim 1. The invention also provides a seafood storage and/or transportation system according to claim 17.

When a water source is provided overhead, the container of the present invention allows the stored seafood product to be submerged in water, while also obtaining a substantially complete turnover of water within the container (including waste products). This facilitates the mixing of water in the container by drawing away the possibly contaminated water from near the bottom of the container and pulling down the cleaner, oxygen rich water from near the top of the container.

There is provided a seafood container comprising a container, the container comprising a bottom wall, two side walls and two end walls. The container comprises at least one channel, the channel having an inlet at the lower portion of the interior of the container, a hollow body that extends upward, and an outlet that communicates with the exterior of the container. The at least one channel assists in removal of water from the lower portion of the container, which will be accompanied by some of the waste product from the stored seafood.

Preferably, there is a lid hingedly attached to the top of the seafood container. In one embodiment, the lid has at least one trough that serves to trap water as it passes over the lid. The water is retained in the trough until it enters the inside of the container through a plurality of holes. The container may have slots near the upper portion to define a threshold level of water.

An insert may be placed into the container to secure and protect the seafood product during storage and/or transportation.

### Brief Description of the Drawings

The seafood container will be described in more detail having regard to the drawings in which:
**Figure 1** is a top perspective view of an embodiment of the seafood container with the lid in the closed position;
**Figure 2** is a top perspective view of the embodiment shown in Figure 1 with the lid in the open position;
**Figure 3** is a top perspective view of the embodiment shown in Figure 1 with the lid removed;
**Figure 4** is a cross-sectional top perspective view of the embodiment shown in Figure 3;
**Figure 5** is an isolated view of drainage channels from the seafood container according to an embodiment of the present invention;
**Figure 6** is a bottom perspective view of an embodiment of the lidded seafood container;
**Figure 7** is another bottom perspective view of an embodiment of the lidded seafood container with the lid removed;
**Figure 8** is a top perspective view of the lid portion according to an embodiment of the invention;

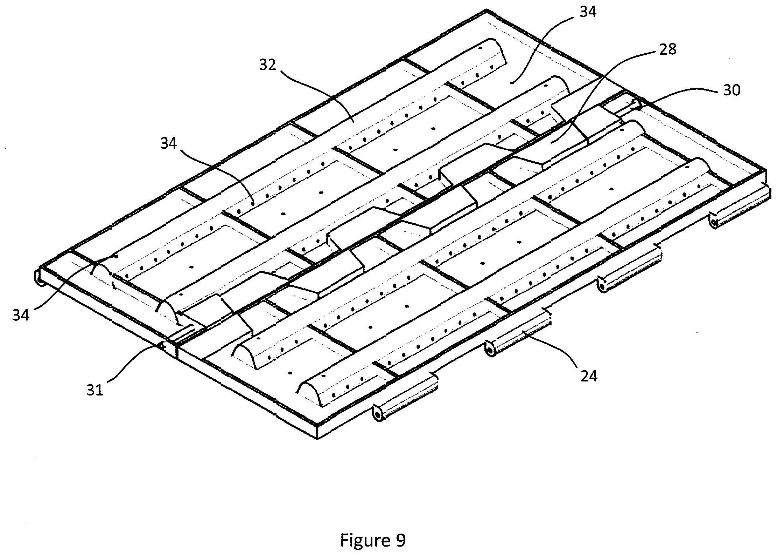

**Figure 9** is a bottom perspective view of the lid portion according to an embodiment of the invention;
**Figure 10** is a top perspective view of the lid portion according to another embodiment of the invention;
**Figure 11** is a perspective view of an insert for the lidded seafood container for storing seafood, such as crustaceans, according to an embodiment of the invention;
**Figure 12** is a perspective view of another embodiment of the lidded seafood container, illustrating an alternative arrangement for the insert supports;
**Figure 13** is a horizontal cross section view of the embodiment shown in Figure 12, further illustrating the alternative arrangement for the insert supports;
**Figure 14** is a perspective view of an insert for the lidded seafood container for storing seafood, such as crustaceans, according to an alternative embodiment of the invention;
**Figure 15** is a perspective view showing the insert of Figure 11 or 14 placed inside a seafood container according to the invention;
**Figure 16** is a top perspective view of an alternative insert for the lidded seafood container for storing seafood, such as mollusks, according to an another embodiment of the invention;
**Figure 17** is a perspective view of another embodiment of the lidded seafood container, illustrating an alternative arrangement for the insert supports;
**Figure 18** is a horizontal cross section view of the embodiment shown in Figure 17, further illustrating the alternative arrangement for the insert supports;

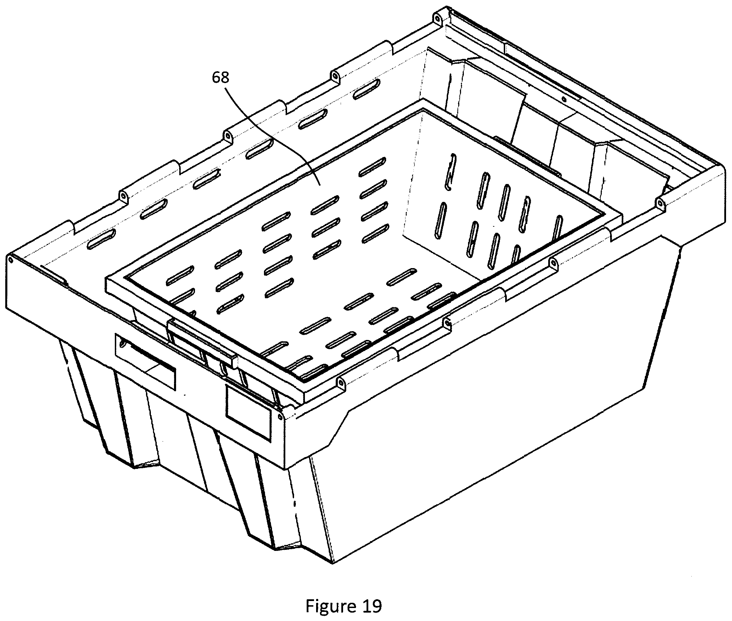

**Figure 19** is a top perspective view of an embodiment of the lidded seafood container, showing the insert of Figure 16 inside the container;

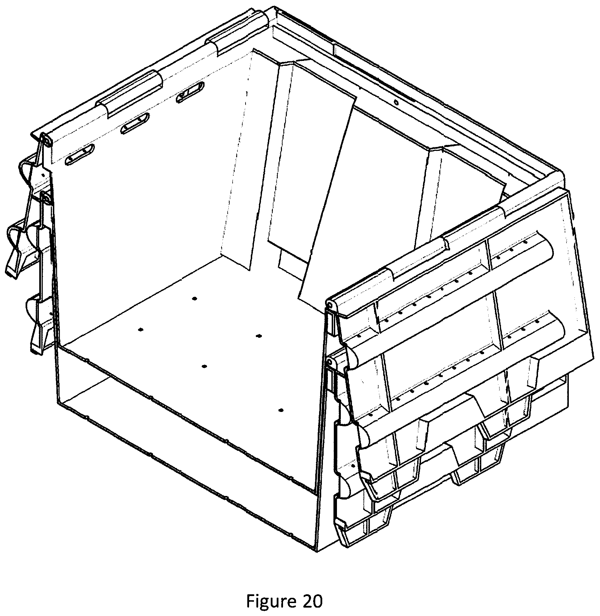

**Figure 20** a transverse cross-sectional perspective view of a plurality of lidded seafood containers according to an embodiment of the invention in a nested configuration;

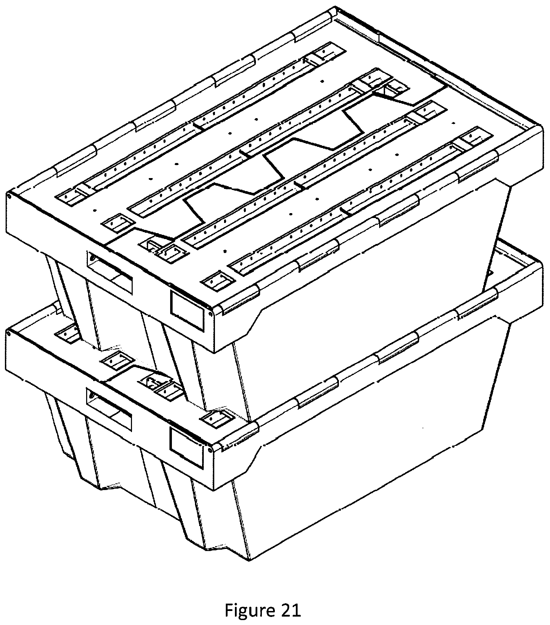

**Figure 21** is a perspective view of multiple lidded seafood containers according to an embodiment of the invention in a stacked configuration;
**Figure 22** is a top perspective view of another embodiment of the seafood container with the lid in the closed position;
**Figure 23** is a top perspective view of the embodiment shown in Figure 22 with the lid in the open position; and
**Figure 24** is a cross-sectional top perspective view of the embodiment shown in Figure 23.

### Detailed Description of the Invention

A better understanding of the present invention will become apparent to those skilled in this art from the following detailed description, wherein there are described preferred embodiments of the invention. As will be realized, the invention is capable of modifications in various obvious respects, all without departing from the scope of the invention as defined in the claims.

Accordingly, the description should be regarded as illustrative in nature and not as restrictive.

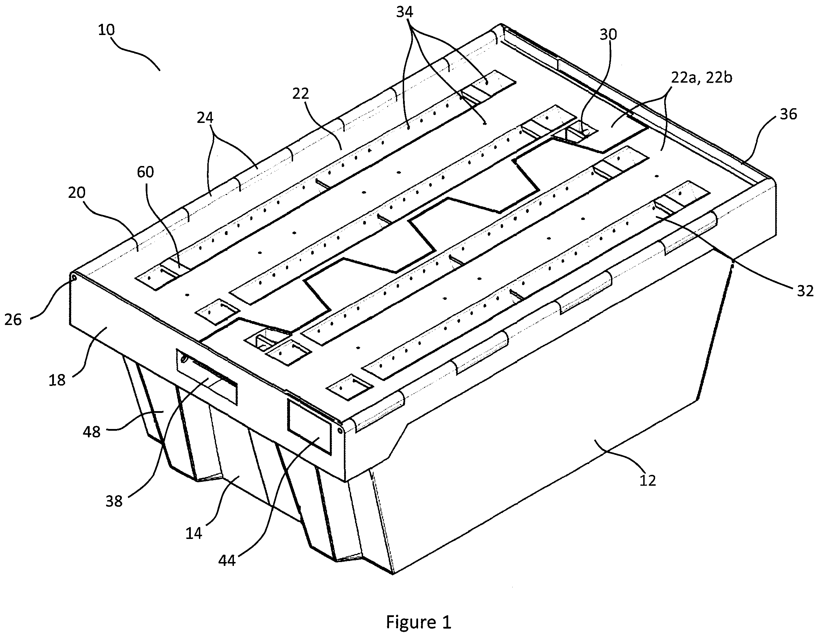

Referring to Figure 1, there is shown a seafood container 10 according to an embodiment of the invention. The seafood container 10 is generally a container for the storage and/or transportation of seafood, such as crustaceans, having therein a plurality of mechanisms to trap and direct water into the container 10 and drainage mechanisms to allow the water to thereafter flow out of the container 10.

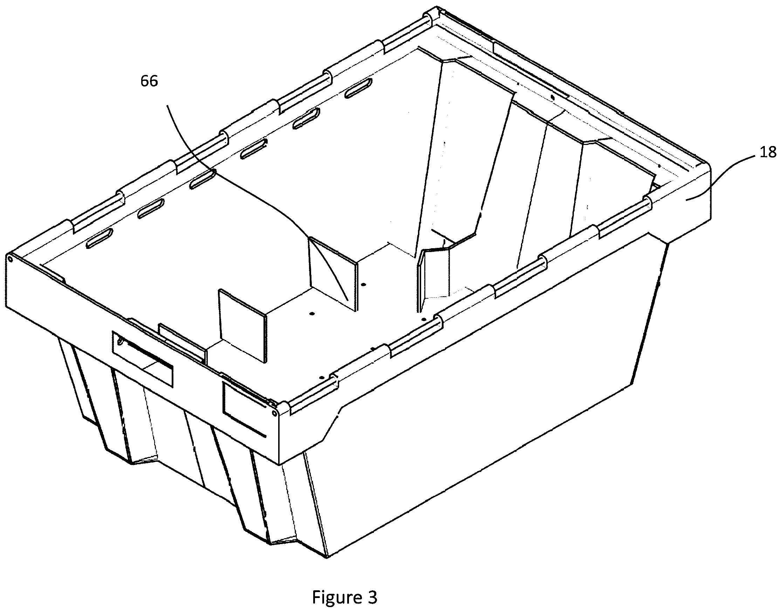

The container 10 comprises two sidewalls 12, two endwalls 14 and a bottom wall 16 as shown in Figures 1 to 3, which are preferably integrally formed together, such as through injection moulding. The lidded seafood container 10 is shown in the drawings as having a rectangular shape, however, other shapes, such as quadrilateral or rounded shapes, are contemplated.

The container 10 has a lip portion 18 that protrudes outwardly along its upper perimeter. In the embodiment as shown, the upper part of the lip portion 18 on at least one sidewall 12 comprises a hinge mechanism 20 for hingedly attaching a lid 22 to the container 10. The lip portion 18 and the lid preferably each contain hinge knuckles 24 that matingly connect, and a pin 26 to retain the knuckles 24 together to form the hinge 20. Other hinge-type connections can be utilized to secure the lid 22 to the container 10. In another embodiment, the lid 22 is hingedly connected to at least one endwall 14.

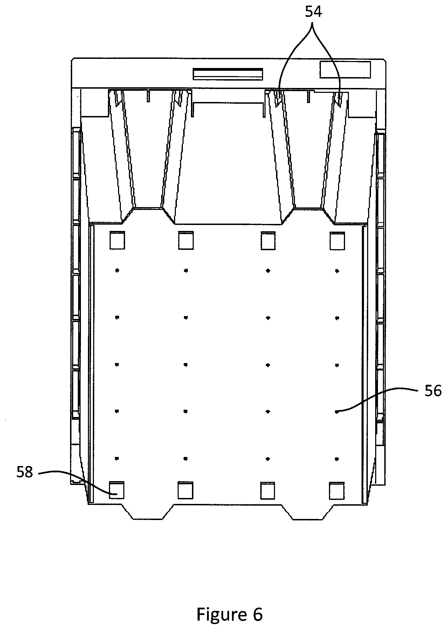

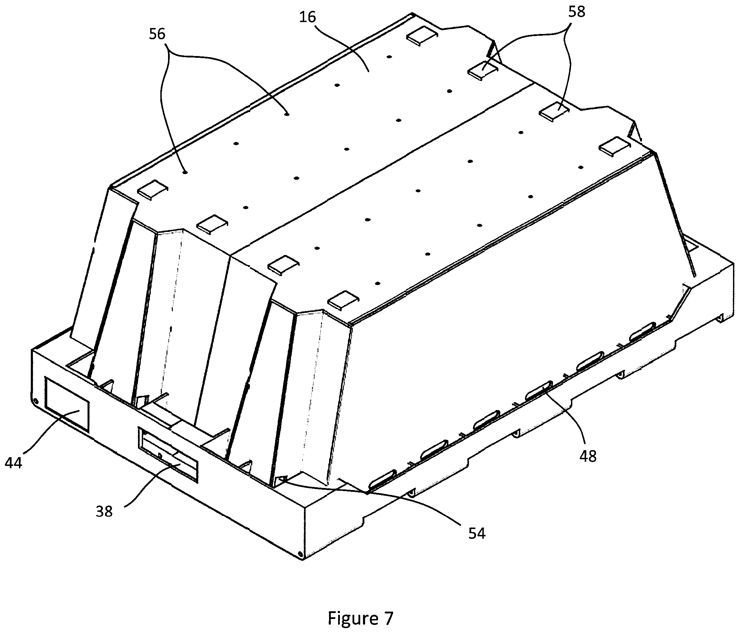

The Figures, particularly Figures 6 and 7, illustrates an embodiment where the lid 22 comprises two pieces 22a, 22b, with each piece being hingedly connected to a sidewall 12. The end portions of the lid pieces 22a, 22b may comprise flaps 28 that interconnect with each other to close the lid 22. The number of flaps 28 is not particularly limiting, and there may be a single flap 28 on each lid piece, or a plurality of flaps 28. Alternatively, the lid pieces 22a, 22b may comprise other known means that allow them to interconnect, or they may not interconnect at all when in a closed position.

As shown in the drawings, the lid pieces 22a, 22b comprise a latch mechanism 30 that secures the lid pieces 22a, 22b to the lip portion 18 of the container 10, when the lid 22 is in the closed position. According to one embodiment, the latch mechanism 30 comprises a spring loaded bolt 31 that is actuated by the user when the lid 22 is being closed. Preferably the spring loaded bolt 31 is made from stainless steel to deter rusting during use. The bolt 31 may be received by a mating latch hole 42 in the lip portion 18, or by a protruding edge of the lip portion 18. Other known mechanisms to secure the lid in a closed position can be utilized while falling within the scope of the invention, or alternatively, the lid does not employ a securing mechanism.

According to a further embodiment of the invention, the container 10 may have only a single lid piece hingedly connected to a sidewall 12 or an endwall 14 of the container, which is closed on the container 10 in e.g. a snap-fit or pressure fit manner, or by way of another mechanism that would be known to one of skill in the art.

According to another embodiment not shown in the drawings, the lid 22 is not hingedly connected to the container 10. Rather, the lid is a separate piece. In this embodiment, the lid attaches to the container 10 in e.g. a snap-fit or pressure fit manner, or by way of another mechanism that would be known to one of skill in the art.

Referring to an embodiment shown in Figures 1 and 6, the lid preferably 22 comprises at least one trough 32 for catching water that runs on the lid 22 of the container 10. The retained water ultimately passes through the trough 32 to the inside of the container 10. Preferably there is a plurality of troughs 32 integrated into the lid 22, as this will increase the amount of water that can be captured, thereby increasing the amount of water directed into the container 10. It is preferred that at least one trough 32 extends downward, below the plane of the face of the lid 22. This will conserve vertical space when multiple containers 10 are in a stacked configuration.

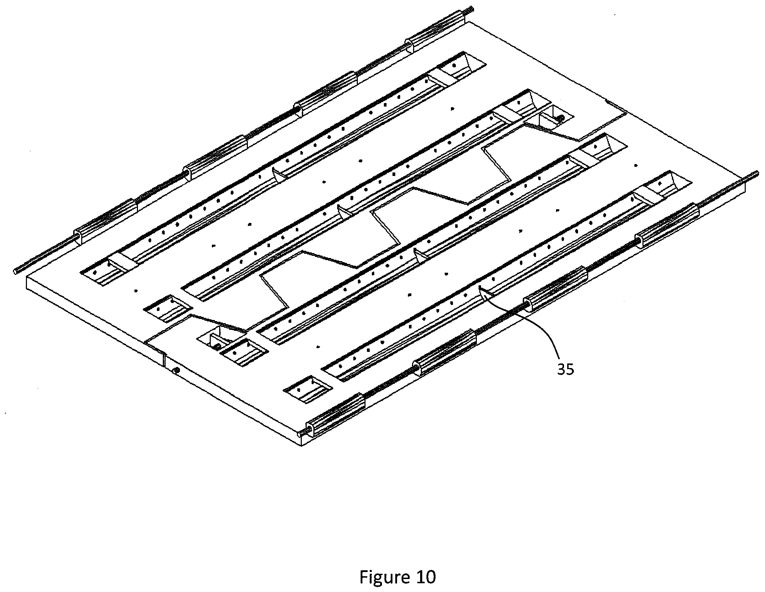

According to one embodiment, the at least one trough 32 has at least one partition 35 (see Figure 10). The at least one partition 35 can be placed anywhere along the length of the trough 32. In the absence of a partition 35, if the container 10 slants or becomes askew during transportation, water may pool at one end of the trough 32. The partition 35 serves to divide the water in the trough 35 along predetermined lengths thereof, thereby allowing water to enter the container 10 at more regular and maintained intervals.

The troughs 32 as shown run longitudinally substantially down the length of the lid 22, however, it is contemplated that the troughs 32 can be designed to run laterally across the lid 22. It is possible that the troughs 32 form a criss-cross pattern on the lid 22. The troughs 32 may be continuous and span the length and/or width of the lid 22, or they may be shorter discontinuous troughs that are interspersed throughout the lid 22 at predetermined or random intervals. The dimensions of the troughs are not limiting to the invention, however, deeper troughs 32 will be capable of retaining more water to ultimately direct into the container 10.

In another embodiment that is not shown in the drawings, rather than a trough 32, the lid 22 comprises at least one depression or pocket. The depression or pocket serves a similar purpose to the trough 32, particularly as noted below with respect to comprising holes to permit water into the container 10, however, they are envisioned as smaller than the troughs, and square, circular, ovular etc. in shape. They may be randomly arranged along the lid 22, or placed in a predetermined ordered fashion.

When a water source is placed above the container 10, water collects in the trough 32 and enters the container 10 through a series of holes 34 that communicate with the interior thereof. The holes 34 are preferably placed along the length of trough 32, and may be placed at any position along the sides, and in a random or ordered orientation (See e.g. Figures 6 & 7). Preferably smaller holes are placed along the bottom of trough 32 to ensure complete drainage once water source diminishes or is terminated. Preferably, the gauge of holes 34 are approximately 3/16" and the smaller drain holes are approximately 1/8". In other embodiments, the gauge of the holes may also vary, as the number of holes 34 and the diameter of holes 34 will directly relate to the rate that water enters container 10. For example, if it is preferred that rate of water entering the container is low, the number of holes 34 and/or the diameter of the holes 34 10 should be minimized.

In certain situations, such as with the storage and/or transportation of certain crustaceans, it may be ideal to have an increased rate of water entering the container 10. Accordingly, it is also contemplated that the lid 22, e.g. the face of the lid, may have holes 34 that communicate with the interior of the container 10 as can be seen in Figures 1 and 6. In a preferred embodiment, the lid holes will be approximately 1/8" and will supplement the water entering the container 10 through the holes 34 in the trough 32.

According to one embodiment, in order to facilitate water entering the container 10, such as through the capture of water by the troughs 32, when the lid 22 is in the closed position, it is structured and dimensioned such that it is sloped toward the troughs 32. In such an embodiment, water that lands on the lid 22 will effectively be funnelled toward a trough 32 to expedite the process of filling the container 10 with water.

Referring again to Figure 1, in another embodiment of the invention, there is a raised rim 36 around the lid 22 of the container 10. The rim 36 serves to help retain water on top of the lid 22 by acting as a physical barrier, thereby deterring water from falling off the lid 22 and running down the outside of the container. The rim 36 also serves to secure containers 10 when they are in a vertical stacked orientation. Retaining water on the lid 22 should facilitate the water ultimately entering the container 10 via the holes 34. The raised rim 36 may be integrally formed from the lip portion 18 or from the lid 22. Or alternatively, the rim 36 is formed from both the lip portion 18 and the lid 22. As can be seen from Figure 1, one embodiment has the hinges 20 elevated above the plane of the lid 22 (when the lid is in the closed position) and the lip portion 18 elevated above the plane of the lid 22, which in conjunction form a raised rim 36 around the perimeter of the lid 22.

In order to facilitate moving the container 10, it is preferred that the container comprise a handle 38. In one embodiment, the lip portion 18 comprises an opening 38. The opening 38 preferably does not extend through to the inside of the container 10, but rather forms a rigid place where the container 10 can be conveniently grasped if it needs to be moved. It is contemplated that on the inside of the handle opening 38, there are holes 40 to accommodate a rope handle (not shown) as an alternative form of grasping and lifting the container 10. Or alternatively, there is no opening that forms a handle in the container 10, but rather there are means to attach at least one rope handle to the container 10. In a further embodiment, a grip portion 73 is moulded into the lip 18 of the container 10 to facilitate gripping and lifting.

Typically, there will be a plurality of containers 10 in transit together, and therefore, it is also contemplated that there is a means to identify and differentiate the containers 10. In the embodiment illustrated in the drawings, the lip portion 18 comprises an identification recess or opening 44 that can receive a tag, sticker, card or the like. The identification recess or opening 44 can be located at alternative sites along the exterior of the container 10, however, the lip portion 18 would be preferred, as it will be more visible and accessible, such as when the containers 10 are in a stacked orientation.

In one embodiment, the container 10 comprises a sealed chamber 45 around its perimeter, such as in the lip portion 18. The sealed chamber 45 is designed to provide buoyancy to the container 10, such that if the container 10 becomes submerged, it will have some inherent floatability. The sealed chamber may be continuous around the perimeter of the container 10, and can be comprised of a structural web formed from gas assisted injection moulding.

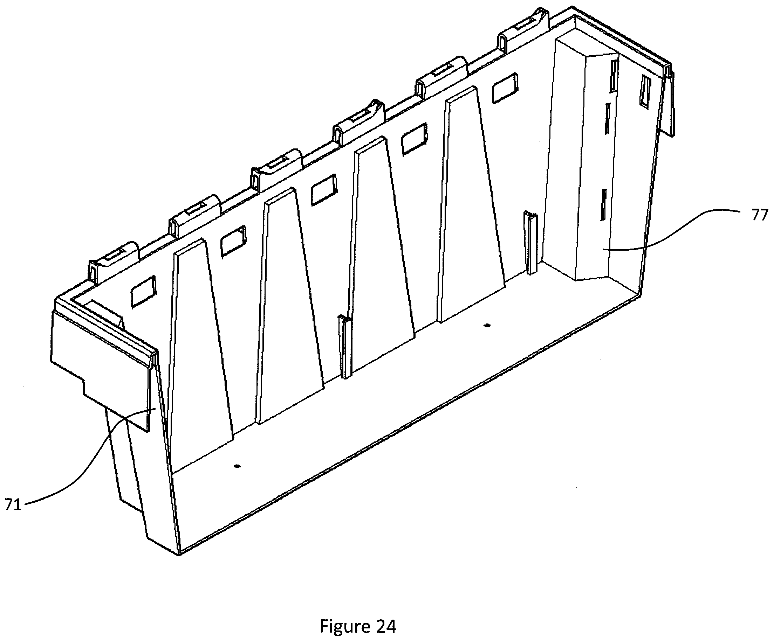

In another embodiment, the container 10 comprises a void space 71 (see Figure 24) under at least a portion of the lip 18. The void space 71 can receive and secure buoyant materials, such as Styrofoam^{®} and the like, to increase the inherent floatability of the container 10.

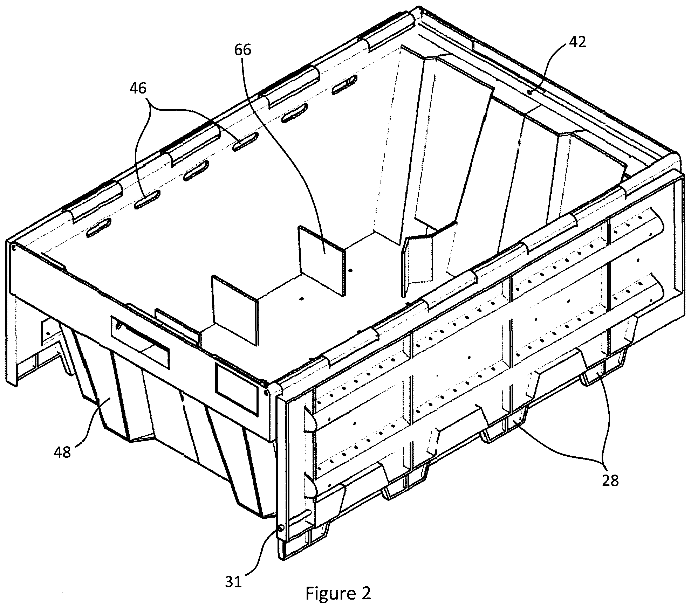

Preferably, the container 10 has at least one drainage slot 46, and more preferably, the container has a plurality of drainage slots 46 as can be seen in e.g. Figures 2 to 4. The drainage slots 46 are preferably on the sidewalls 12 and/or endwalls 14 of the container 10, and more preferably at or just below the lip portion 18 on the sidewalls 12 and/or endwalls 14. In a preferred embodiment, all of the drainage slots 46 are located at an equivalent height from the bottom wall 16 of the container 10, as can be seen in Figure 2.

The drainage slots 46 facilitate air exchange between the exterior and interior of the container 10, which also allows the cooler exterior air access to the interior of container 10 so that falling water can be reoxygenated as it drops from the holes 34 in the trough 32 and/or lid 22 (See Figure 2). Furthermore, when in use, the container 10 will typically contain some amount of water. The drainage slots 46 serve to effectively influence the desired upper limit of water in the container 10, as once the water level in the container 10 reaches the height of the drainage slots 46, the water will overflow and exit the container. Accordingly, the height of the drainage slots 46 on the sidewalls 12 and/or endwalls 14 may vary depending upon the desired water level. The drainage slots 46 are preferably of a size that any large particles or debris that may have entered the container 10 are able to flow out of the container 10 once the internal water level reaches the height of the drainage slots 46. Additionally, the drainage slots 46 allow for viewing of the inside of container 10 to ensure proper water flow and to observe the product.

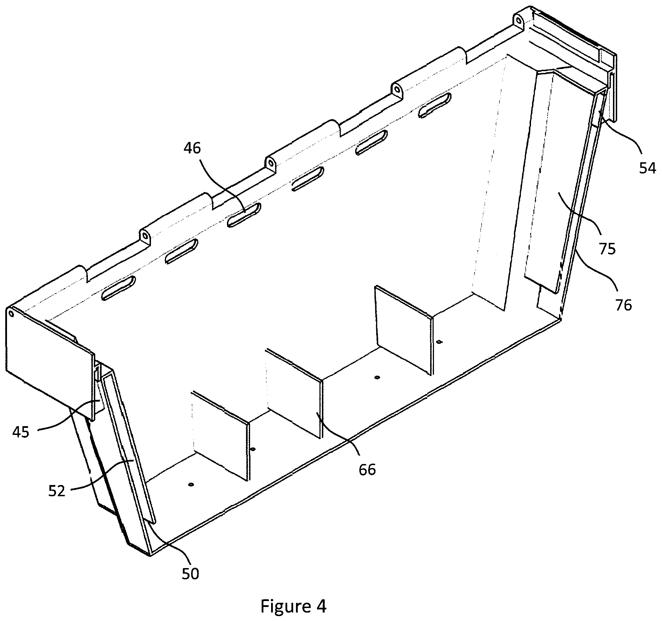

According to one embodiment, the container 10 comprises at least one drainage channel 48, and preferably a plurality of drainage channels 48 (See e.g. Figures 4 to 6). When water submerses the product in the container 10, it removes ammonia and other waste from the around the seafood, among other things. These waste products tend to accumulate near the lower portion of the container 10. Whereas the drainage slots 46 assist in drainage of water that is near the upper portion of the container 10, the at least one channel 48 assists in removal of water from the lower portion of the container 10, which will typically be accompanied by some of the waste product. In other words, the channels 48 help the container approach a more complete turnover of water within the container 10, and serve to facilitate mixing of the water by drawing away the possibly contaminated water from near the bottom of the container 10 and pulling down the cleaner, oxygen rich water from near the top of the container 10.

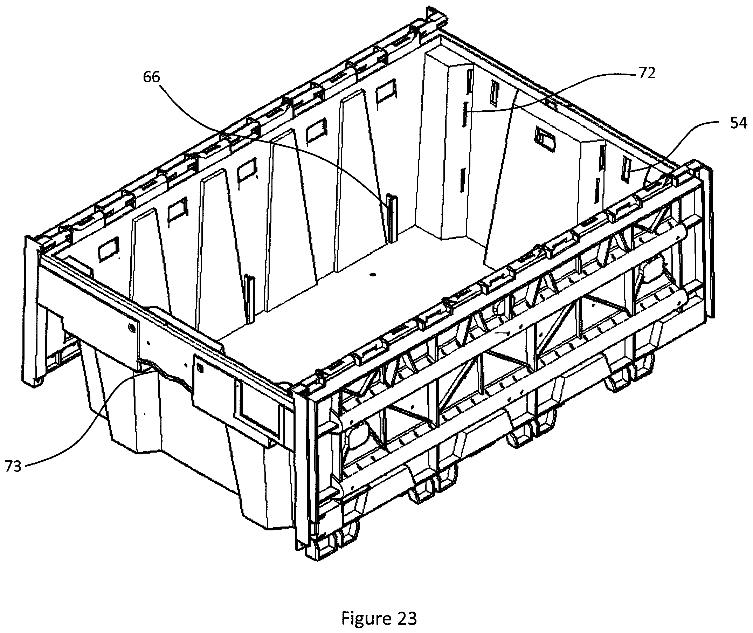

The drainage channels 48 are preferably located on the endwalls 14; however, they may also be located on the sidewalls 12. Referring to an exemplary embodiment of the drainage channels 48 as shown in Figure 4, the channel 48 comprises a channel inlet 50 near the bottom wall 16 of the interior of the container 10, a channel body 52, and a channel outlet 54. In one embodiment, the channel body 52 is defined by an inner channel wall 75, side channel walls 77, and an outer channel wall 76. The outer channel wall 76 and side channel walls 77 are typically a portion of the exterior wall of the container 10. The walls of the channel body 52 may be integrally moulded with the container 10. Or alternatively, the inner channel wall 75 is manufactured separately, and is attached to the container 10 to form the hollow body 52. In this embodiment, the inner channel wall 75 can be attached to the container 10 after the manufacture thereof. For example, the inner channel wall 75 can be manufactured with tabs (not shown) that attach to the container 10 via a snap fit with channel slots 72 located on the side channel walls 77 (see Figures 23 and 24). Other methods to secure the inner channel wall 75 to the container 10 that would be well understood to those skilled in the art are also contemplated.

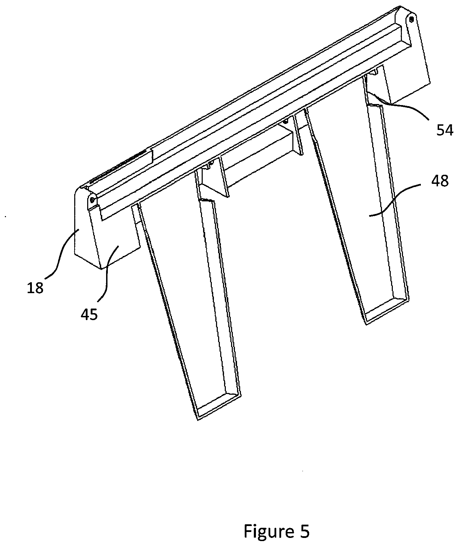

In the embodiment illustrated in Figure 5, each channel 48 comprises two channel outlets 54 located at the upper side channel walls 77, however, the size and location of the channel outlet is not limiting. For example, in Figure 23, there is an additional channel outlet 54 at the upper side of the outer channel wall 76.The drainage channels 48 also serve to influence the water level in the container 10 in a somewhat synonymous manner to the drainage slots 46. When water is in the container 10, the water will enter the channel 48 through the inlet 50, and proceed up the channel body 52 until it reaches a height that is near equivalent with the water level in the container 10. If the water level in the channel body 52 is at or above the height of the channel outlet 54, then the water will exit the channel 48 outside of the container, thereby lowering the amount of water (and hence water level) inside the container 10. Alternatively, if the water level in the channel body 52 is below, the height of the channel outlet 54, the water will not exit the channel 48. But as more water enters the container 10 through e.g. the holes 32 in the lid 22 and/or trough 32, the water level in the channel body 52 will rise until it is again at or above the level of the channel outlet 54, where the water will be expelled from the container 10.

In a preferred embodiment, channel outlets 54 are located at a position on the container 10 such that when multiple containers 10 are in a stacked vertical configuration, the channel outlets 54 are located substantially in line with troughs 32 on the lid 22 of the container 10 below. This will facilitate water capture by lid 22 and troughs 32 of the underneath container 10.

Preferably the height of the channel outlet 54 is sufficient to ensure that the container 10 retains enough water to substantially immerse the seafood. It is contemplated that various containers 10 could be constructed based upon the intended product, e.g. lobster vs. scallops etc. In such an embodiment, the intended product will typically affect how much water each container will be required to retain, which will impact the positioning of the channel outlet 54. It is also preferred that the channel outlet 54 is not positioned at a height higher than the drainage slots 46, but rather it is preferred that the channel outlet 54 is at the same height, or more preferably, at a lower height than the drainage slots 46, with respect to the bottom wall 16 of the container 10.

In a further embodiment of the invention, the bottom wall 16 has at least one aperture 56 to assist in drainage of water from the container 10. The size of the at least one aperture 56 may vary, however, it is preferable that the diameter of the at least one aperture 56 is not too large, such as approximately 1/8", as the container 10 may have difficulty in retaining water. These apertures 56 assist in draining the water from the lower portion of the container 10, and for fully draining the container 10 when it is no longer in use. Furthermore, if multiple containers are stacked vertically, the apertures 56 assist in distributing the water from an upper container 10 onto the lid 22 of the container 10 situated underneath.

Referring to Figure 5, according to an embodiment of the invention, the container 10 has at least one foot member 58, and preferably a plurality of feet 58, on the exterior of the bottom wall 16. Feet on the bottom of the container 10 can serve multiple purposes. The feet 58 could be made from a gripping material, such as rubber, to aid in slip prevention when the container 10 is placed on e.g. a wet surface. Also, the feet 58 can facilitate stacking of containers 10 by mating with containers 10 underneath.

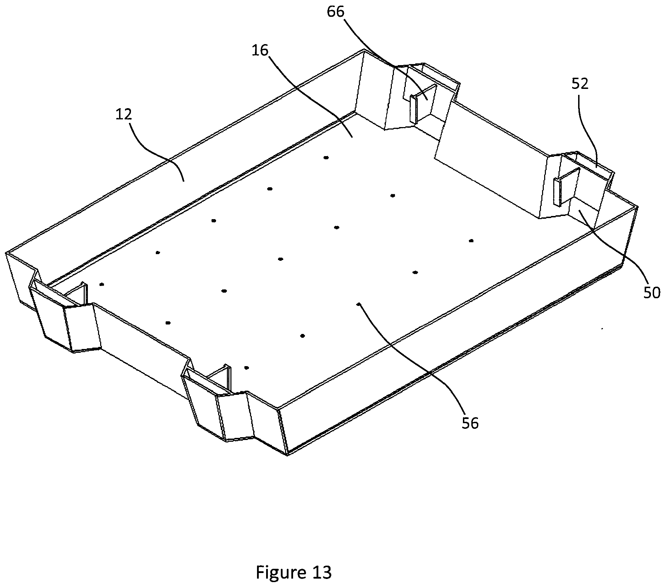

For example, when a container 10 is placed on top of another container 10 in a vertically stacked configuration, the feet 58 of the upper container 10 are ideally situated such that they nest inside e.g. a trough 32 of the lower container 10. See for example Figure 13. In such an embodiment, the dimensions of the feet 58 will need to reflect those of the trough 32, such that the feet 58 can be matingly received by the trough 32.

In addition, depending upon the shape and configuration of the troughs 32 relative to the placement of the feet 58 on the underside of the container 10, rails 60 can be added to the troughs 32 to define areas for receiving and securing the feet 58 within the troughs 32.

The size and shape of the feet 58 is not particularly limiting, however, if they are too small in either height or area, their ultimate purpose may be minimized.

During storage and/or transport, the seafood products may be placed directly in the container 10. According to one embodiment, it is preferred that the container 10 comprise at least one insert to organize the seafood product and maximize space within the container 10. The nature of the insert is not particularly limiting to the invention, and could be any appropriate product known to one of skill in the art. However, the type of insert will likely vary depending upon the type of seafood product that is being stored and/or transported.

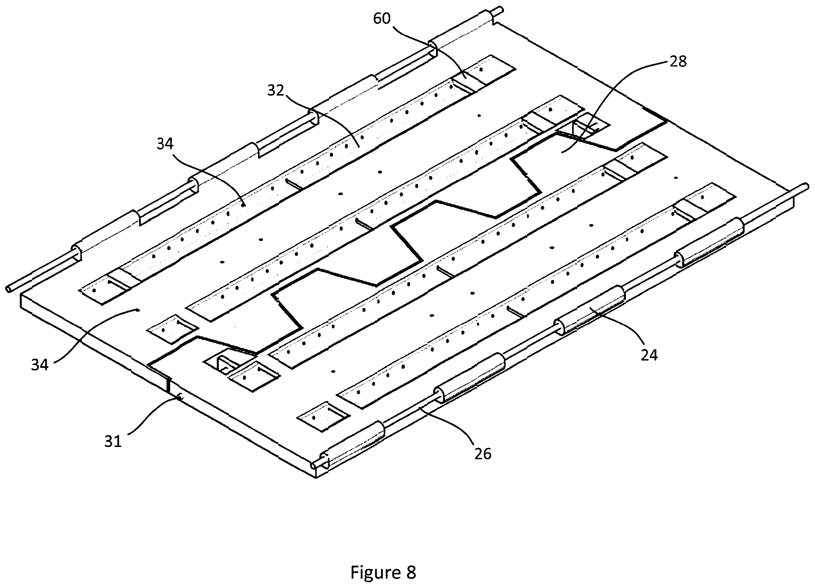

For example, if the product to be stored and/or transported is a crustacean, such as a lobster, an insert such as the honeycomb insert 62 shown in Figure 8 could be employed. The exemplary honeycomb insert 62 as shown has hexagonal compartments 64, which can vary in size depending on the intended cargo. Preferably the honeycomb insert 62 is structured such that it is collapsible to minimize needed storage space when not in use.

According to one embodiment, the container may have insert supports 66. As shown in Figures 2 to 4, the insert supports 66 may extend upward and/or outward from the walls 12, 14, 16 of the container 10.

In order to encourage circulation of contaminated water throughout the container 10, in one embodiment, the compartments 64 of the insert 62 comprise holes or channels (not shown), which allow the water to intermingle. Preferably the channels are located near the lower portion of the compartments 64 so that the contaminated water in all compartments will be able to exit the container 10 through the channels 48.

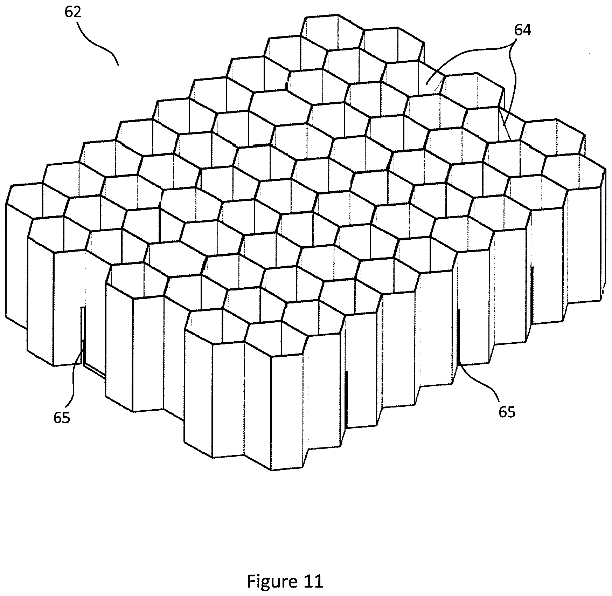

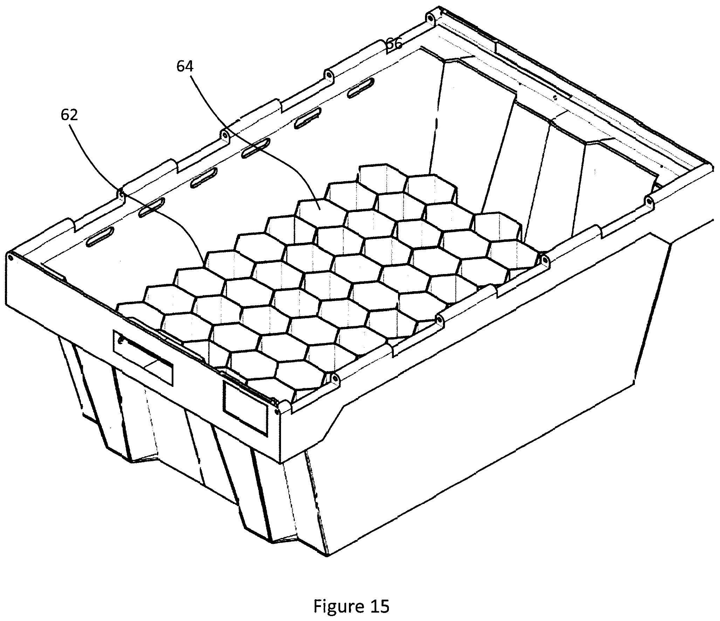

Preferably, the honeycomb insert 62 has vertical slots 65 extending up the sides thereof, which correspond with the insert supports. For example, when the honeycomb insert 62 as shown in Figure 11 is placed inside the container 10 as shown in Figure 2, the vertical slots 65 mate with the insert supports 66 to secure the honeycomb insert inside the container 10 (See Figure 15). At this point, the cargo e.g. lobster, are then individually placed in each of the compartments 64. As can be appreciated, use of such an insert maximizes the number of e.g. lobster that can be placed in the container 10, and provides protection to the product so that it is not damaged during transportation.

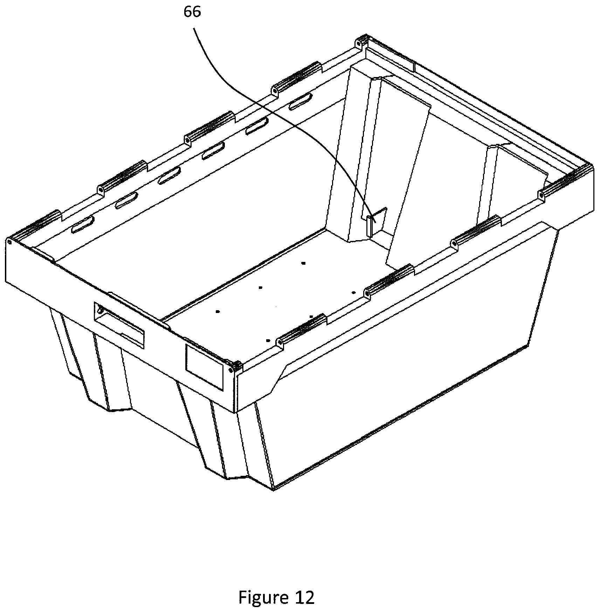

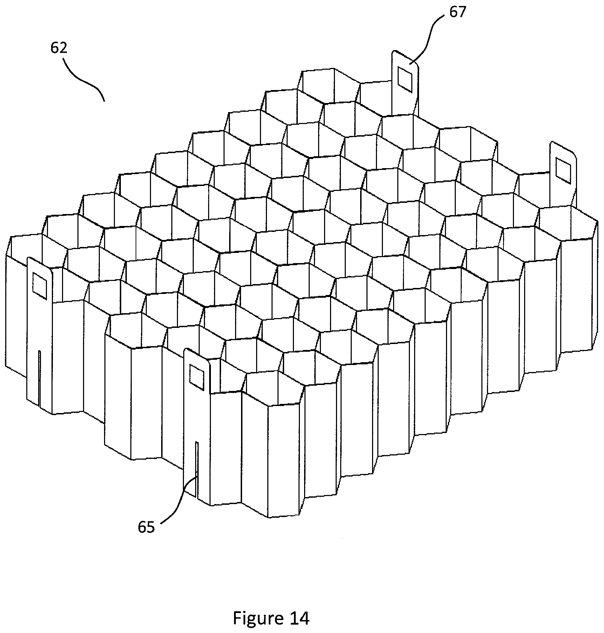

An alternative embodiment of the honeycomb insert 62 is illustrated in Figure 14. This embodiment has at least one tab 67 to facilitate raising and lowering of the insert 62. In addition, this embodiment has fewer vertical slots 65, which are preferably located and arranged to matingly engage with the insert supports 66 in the container 10 as illustrated in Figures 12 and 13.

In the embodiment of the container 10 as illustrated in Figures 12 and 13, the insert supports 66 extend outward from the bottom, side and/or end wall 12, 14, 16 of the container only minimally into the interior thereof, but enough to receive and secure the honeycomb insert 62. This embodiment of insert support 66 may have a T-shaped cross section. Once the vertical slots 65 of the honeycomb insert 62 are placed over top of the insert supports 66, the T-shaped cross section assists in further securing the insert 62 in place.

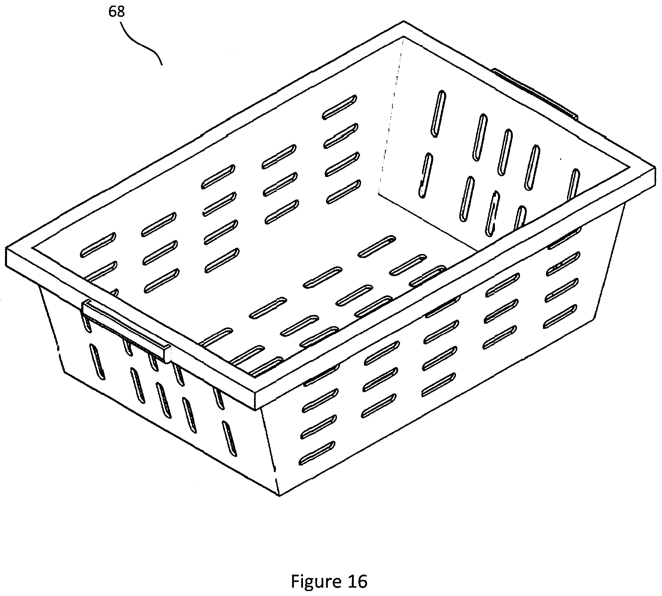

Alternatively, if the seafood product was a mollusk, such as a scallop or oyster, a tray or a basket type insert 68, such as that shown in Figure 16 may be preferred. This type of insert preferably has slots 70 to allow for water to flow freely over the product, and is preferably structured and dimensioned to allow for nesting and vertical stacking of the inserts 68 when not in use to minimize required storage space.

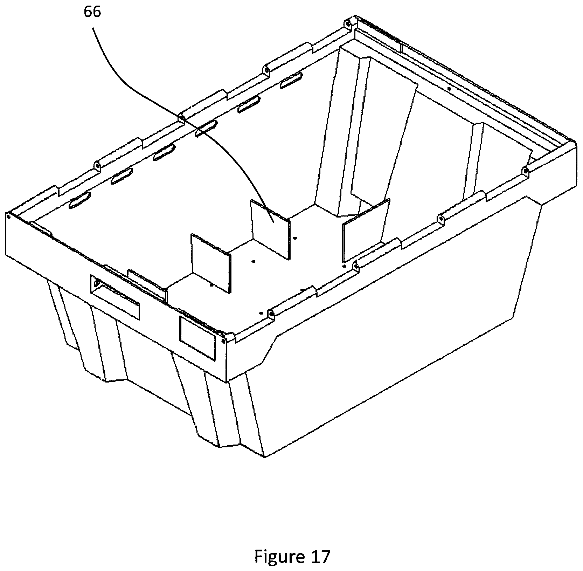

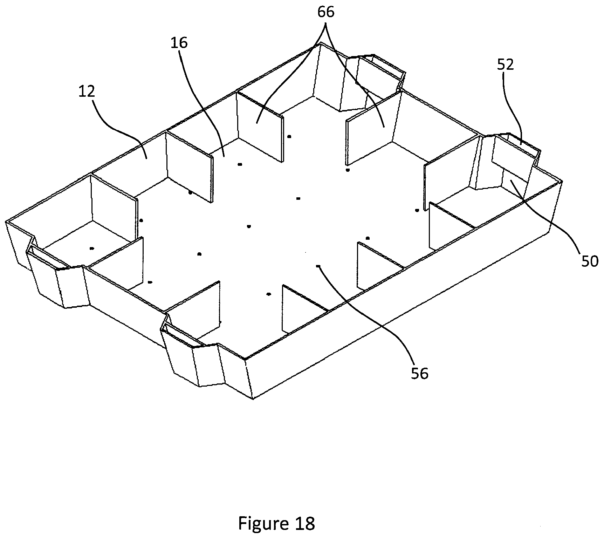

A preferable embodiment of the container 10 for use with the tray insert 68 is illustrated in Figures 17 and 18. The insert supports 66 in this embodiment are substantially linear, which can contribute to ease of manufacture, and will allow for a more fluid circulation of water (and various waste materials) underneath the tray insert 68.

It is preferred that the seafood containers 10 are structured and dimensioned so that when not in use, they can be conveniently nested within each other as shown in Figure 12.

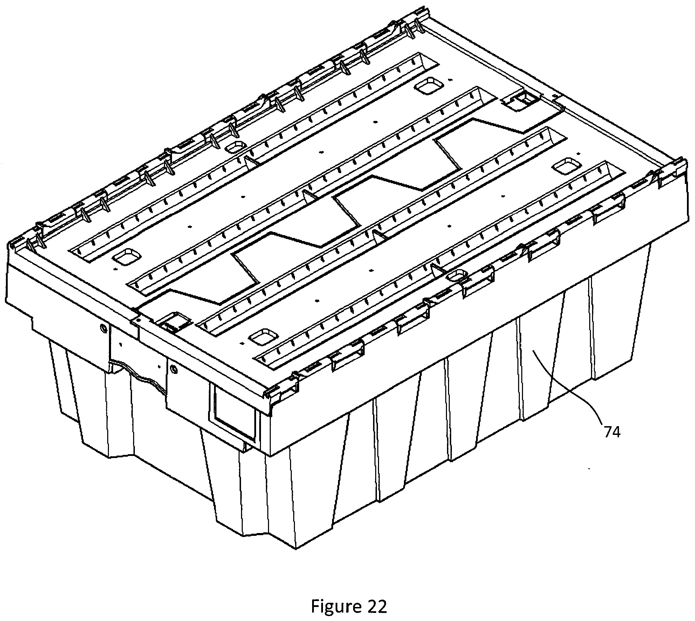

As can be seen in Figures 22 to 24, another embodiment of the invention includes ribs 74 that have been moulded into the container 10. When multiple containers are stacked vertically, the lower containers 10 are required to withstand a heavy burden. The addition of the ribs 74 to the container 10 provides additional strength and support. A plurality of ribs 74 on the sidewalls12 of the container are shown in the Figures, however, the number, shape and location of the ribs is not particularly limiting to the invention.

An exemplary use of a seafood container 10 according to one embodiment of the present invention preferably utilizes a transportation system, such as that described in PCT Application No. PCT/CA2008/000269.

The seafood product is placed in the seafood container (with or without an insert) and placed in the transportation system. The transportation system comprises a vehicle having a storage compartment structured and adapted to be selectively closed against its outside environment. Dry air is circulated through a heat exchange layer mounted on sides of the storage compartment. The heat exchange layer comprises channels which are in an airtight relationship with the interior of the storage compartment, and the dry air being pumped through the channels of the heat exchange layer at a desired temperature so as to maintain the temperature inside the storage compartment. A spraying assembly structured and positioned for spraying the containers 10 positioned within the storage compartment is provided, as is means for collecting the sprayed liquid and returning it to the spraying assembly.

Preferably, the transportation system comprises a collection tank for storing the collected sprayed liquid. The collected liquid can be filtered using a biofilter to reduce metabolic waste in the collected liquid. A blower can also be present to aerate the collected liquid prior to being sprayed on the containers 10. In one embodiment, the temperature of the liquid is regulated by liquid temperature regulation equipment prior to being pumped to the liquid spray system.

If more than one container 10 is to be transported, they may be stacked vertically. Water from the spraying assembly (or other water source) will accumulate on the lid 22 of the uppermost container 10, collect in the trough 32 and enter the container 10 through the holes 34. The water is at least partially reoxygenated as it drops from the holes 34 into the container.

Eventually the water will reach a level in the container 10 where the seafood product is fully immersed. As additional water enters the container 10, it will force water near the bottom of the container 10 into the channel inlet 50, up the channel body 52 and through the channel outlet 54. Furthermore, if the water level rises past a predetermined height, the water will exit the container 10 through the drainage slot(s) 46 located in the upper portion of the container walls 12, 14. The expelled water will trickle down the outside of the container 10 and substantially land on the lid 22 of the container situated underneath. Furthermore, water will slowly exit the container 10 through the apertures 56 on the bottom wall 16, providing additional water to any containers 10 located directly below.

## Claims

1. A seafood storage container, the container (10) comprising:
a bottom wall (16), two side walls (12) and two end walls (14); and
at least one channel (48) located on at least one of the two side walls and the two end walls of the container and comprising a channel inlet (50) near the bottom wall, a channel body (52), and a channel outlet (54), the channel body (52)
being defined by an inner channel wall (75), an outer channel wall (76) being a portion of at least one of the two side walls (12) and the two end walls (14), and channel
side walls (77), wherein the channel inlet (50) fluidically communicates the channel (48) with the lower portion of the interior of the container (10), and the channel outle (54) fluidically communicates the channel (48) with the upper portion of the exterior of the container (10).

2. The seafood storage container according to claim 1, wherein the at least one channel comprises two channel outlets (54).

3. The seafood storage container according to claim 1 or 2, further comprising a lid (22) hingedly attached to the top of the container.

4. The seafood storage container according to claim 3, wherein the lid is a two-piece lid, each piece (22a, 22b) of the lid comprising flaps (28) at their outer edge that interconnect when the lid is in a closed position, optionally further comprising a latch (30) to secure the lid in a closed position.

5. The seafood storage container according to claim 3 or 4, wherein the lid further comprises at least one aperture (34) to allow liquid to enter the container.

6. The seafood storage container according to any one of claims 3 to 5, wherein the lid comprises at least one trough (32) for receiving a liquid, optionally wherein the at least one trough is recessed under the plane of the face of the lid.

7. The seafood storage container according to claim 6, wherein the at least one trough comprises at least one aperture (34) to allow collected liquid to enter the container.

8. The seafood storage container according to claim 6 or 7, wherein the at least one trough comprises a partition (35).

9. The seafood storage container according to any one of claims 1 to 8, further comprising a lip (18) that extends outwardly and downwardly from the top of the container.

10. The seafood storage container according to any one of claims 1 to 9, further comprising buoyant material secured to the exterior of the container.

11. The seafood storage container according to any one of claims 1 to 10, further comprising at least one drainage aperture (46) on the sidewalls and/or endwalls of the container, optionally wherein the channel outlet is at about the same height or lower than the at least one drainage aperture with respect to the bottom wall.

12. The seafood storage container according to any one of claims 1 to 11, wherein the inner channel wall is removably attached to the container.

13. The seafood storage container according to any one of claims 3 to 12, further comprising a rim (36) along the perimeter of the lid, which extends upward above the face of the lid.

14. The seafood storage container according to any one of claims 1 to 13, further comprising at least one hole (56) on the bottom wall of the container.

15. The seafood storage container according to any one of claims 1 to 14, further comprising an insert (62, 68) to receive the seafood product, optionally wherein the insert is a tray (68) or a honeycomb (62).

16. The seafood storage container according to any one of claims 1 to 15, further comprising insert supports (66).

17. A seafood storage and/or transportation system, comprising:
a transportation system, the transportation system comprising:
a vehicle having a storage compartment structured and adapted to be selectively closed against its outside environment;
a heat exchange layer in the storage compartment to maintain an operative temperature within the storage compartment;
a spraying assembly structured and positioned for spraying liquid in the storage compartment;
a means for collecting the sprayed liquid and returning it to the spraying
assembly; and
the seafood storage container (10) according to any one of claims 1 to 16,
wherein the seafood storage and/or transportation system optionally further comprises at least one of a collection tank for storing the collected sprayed liquid before returning it to the spraying assembly; a biofilter to reduce waste in the collected liquid; a blower to aerate the collected liquid prior to spraying; and liquid temperature regulation equipment to regulate the temperature of the liquid prior to spraying.

## Patentansprüche

1. Meeresfrüchtebehälter, wobei der Behälter (10) Folgendes umfasst:
eine Bodenwand (16), zwei Seitenwände (12) und zwei Endwände (14) und
mindestens einen Kanal (48), der an mindestens einer der beiden Seitenwände und der beiden Endwände des Behälters angeordnet ist und einen Kanaleinlass (50) in der Nähe der Bodenwand, einen Kanalkörper (52) und einen Kanalauslass (54) umfasst, wobei der Kanalkörper (52) durch eine innere Kanalwand (75), eine äußere Kanalwand (76),
die ein Teil mindestens einer der beiden Seitenwände (12) und der beiden Endwände (14) ist,
und Kanalseitenwände (77) definiert wird, wobei der Kanaleinlass (50) den Kanal (48) fluidisch mit dem unteren Abschnitt des Inneren des Behälters (10) verbindet und der Kanalauslass (54) den Kanal (48) fluidisch mit dem oberen Abschnitt der Außenseite des Behälters (10) verbindet.

2. Meeresfrüchtebehälter nach Anspruch 1, wobei der mindestens eine Kanal zwei Kanalauslässe (54) umfasst.

3. Meeresfrüchtebehälter nach Anspruch 1 oder 2, ferner umfassend einen Deckel (22) der scharniermäßig an der Oberseite des Behälters angebracht ist.

4. Meeresfrüchtebehälter nach Anspruch 3, wobei der Deckel ein zweiteiliger Deckel ist, wobei jeder Teil (22a, 22b) des Deckels Klappen (28) an seinem Außenrand umfasst, die miteinander verbunden sind, wenn der Deckel in einer geschlossenen Position ist, optional ferner umfassend einen Riegel (30), um den Deckel in einer geschlossenen Position zu befestigen.

5. Meeresfrüchtebehälter nach Anspruch 3 oder 4, wobei der Deckel ferner mindestens eine Öffnung (34) umfasst, damit Flüssigkeit in den Behälter eintreten kann.

6. Meeresfrüchtebehälter nach einem der Ansprüche 3 bis 5, wobei der Deckel mindestens eine Mulde (32) zur Aufnahme einer Flüssigkeit umfasst, optional wobei die mindestens eine Mulde unter der Ebene der Oberfläche des Deckels ausgespart ist.

7. Meeresfrüchtebehälter nach Anspruch 6, wobei die mindestens eine Mulde mindestens eine Öffnung (34) umfasst, damit gesammelte Flüssigkeit in den Behälter eintreten kann.

8. Meeresfrüchtebehälter nach Anspruch 6 oder 7, wobei die mindestens eine Mulde eine Trennwand (35) umfasst.

9. Meeresfrüchtebehälter nach einem der Ansprüche 1 bis 8, ferner umfassend eine Lippe (18), die sich von der Oberseite des Behälters nach außen und unten erstreckt.

10. Meeresfrüchtebehälter nach einem der Ansprüche 1 bis 9, ferner umfassend schwimmfähiges Material, das an der Außenseite des Behälters befestigt ist.

11. Meeresfrüchtebehälter nach einem der Ansprüche 1 bis 10, ferner umfassend mindestens eine Ablauföffnung (46) an den Seitenwänden und/oder Endwänden des Behälters, optional wobei der Kanalauslass bezüglich der Bodenwand auf ungefähr derselben Höhe oder weiter unten als die mindestens eine Ablauföffnung liegt.

12. Meeresfrüchtebehälter nach einem der Ansprüche 1 bis 11, wobei der innere Kanal entfernbar an dem Behälter angebracht ist.

13. Meeresfrüchtebehälter nach einem der Ansprüche 3 bis 12, ferner umfassend einen Rand (36) entlang des Umfangs des Deckels, wobei sich der Rand (36) über die Oberfläche des Deckels nach oben erstreckt.

14. Meeresfrüchtebehälter nach einem der Ansprüche 1 bis 13, ferner umfassend mindestens ein Loch (56) an der Bodenwand des Behälters.

15. Meeresfrüchtebehälter nach einem der Ansprüche 1 bis 14, ferner umfassend einen Einsatz (62, 68) zur Aufnahme von Meeresfrüchteprodukt, optional wobei der Einsatz eine Schale (68) oder eine Wabe (62) ist.

16. Meeresfrüchtebehälter nach einem der Ansprüche 1 bis 15, ferner umfassend Einsatzstützen (66).

17. Meeresfrüchtelager- und/oder -transportsystem, umfassend:
ein Transportsystem, wobei das Transportsystem Folgendes umfasst:
ein Fahrzeug mit einem Lagerabteil, das so strukturiert und ausgeführt ist, dass es gezielt gegen die äußere Umgebung verschlossen werden kann,
eine Wärmetauschlage in dem Lagerabteil, um eine Betriebstemperatur in dem Lagerabteil aufrechtzuerhalten,
eine Sprühanordnung, die zum Sprühen von Flüssigkeit in dem Lagerabteil strukturiert und
positioniert ist,
ein Mittel, um die versprühte Flüssigkeit zu sammeln und sie zu der Sprühanordnung zurückzuführen, und
den Meeresfrüchtebehälter (10) nach einem der Ansprüche 1 bis 16,
wobei das Meeresfrüchtelager- und/oder -transportsystem optional ferner einen Sammeltank zum Lagern der gesammelten versprühten Flüssigkeit bevor er sie zu der Sprühanordnung zurückführt und/oder einen Biofilter zur Reduzierung von Abfallstoffen in der gesammelten Flüssigkeit und/oder ein Gebläse zum Aerifizieren der gesammelten Flüssigkeit vor dem Sprühen und/oder Flüssigkeitstemperaturregulierungsausrüstung zur sRegulierung der Temperatur der Flüssigkeit vor dem Sprühen umfasst.

## Revendications

1. Récipient de stockage de poissons et de fruits de mer, le récipient (10) comprenant :
une paroi inférieure (16), deux parois latérales (12) et deux parois d'extrémité (14) ; et
au moins un canal (48) situé sur au moins une des deux parois latérales et des deux parois d'extrémité du récipient et comprenant une entrée de canal (50) près de la paroi inférieure, un corps de canal (52), et une sortie de canal (54), le corps de canal (52) étant défini par une paroi de canal intérieure (75), une paroi de canal extérieure (76) étant une partie d'au moins une des deux parois latérales (12) et des deux parois d'extrémité (14),
et des parois latérales de canal (77), dans lequel l'entrée de canal (50) met en communication fluidique le canal (48) avec la partie inférieure de l'intérieur du récipient (10),
et la sortie du canal (54) met en communication fluidique le canal (48) avec la partie supérieure de l'extérieur du récipient (10).

2. Récipient de stockage de poissons et de fruits de mer selon la revendication 1, dans lequel l'au moins un canal comprend deux sorties de canal (54).

3. Récipient de stockage de poissons et de fruits de mer selon la revendication 1 ou 2, comprenant en outre un couvercle (22) fixé de manière articulée au sommet du récipient.

4. Récipient de stockage de poissons et de fruits de mer selon la revendication 3, dans lequel le couvercle est un couvercle en deux pièces, chaque pièce (22a, 22b) du couvercle comprenant des rabats (28) au niveau de leur bord extérieur qui s'interconnectent lorsque le couvercle est dans une position fermée, comprenant en outre éventuellement un verrou (30) pour fixer le couvercle dans une position fermée.

5. Récipient de stockage de poissons et de fruits de mer selon la revendication 3 ou 4, dans lequel le couvercle comprend en outre au moins une ouverture (34) pour permettre au liquide de pénétrer dans le récipient.

6. Récipient de stockage de poissons et de fruits de mer selon l'une quelconque des revendications 3 à 5, dans lequel le couvercle comprend au moins une auge (32) destinée à recevoir un liquide, éventuellement dans lequel l'au moins une auge est évidée sous le plan de la face du couvercle.

7. Récipient de stockage de poissons et de fruits de mer selon la revendication 6, dans lequel l'au moins une auge comprend au moins une ouverture (34) pour permettre au liquide collecté d'entrer dans le récipient.

8. Récipient de stockage de poissons et de fruits de mer selon la revendication 6 ou 7, dans lequel l'au moins une auge comprend une cloison (35).

9. Récipient de stockage de poissons et de fruits de mer selon l'une quelconque des revendications 1 à 8, comprenant en outre une lèvre (18) qui s'étend vers l'extérieur et vers le bas depuis le sommet du récipient.

10. Récipient de stockage de poissons et de fruits de mer selon l'une quelconque des revendications 1 à 9, comprenant en outre un matériau flottant fixé à l'extérieur du récipient.

11. Récipient de stockage de poissons et de fruits de mer selon l'une quelconque des revendications 1 à 10, comprenant en outre au moins une ouverture de drainage (46) sur les parois latérales et/ou les parois d'extrémité du récipient, éventuellement dans lequel la sortie du canal est à peu près à la même hauteur ou plus basse que l'au moins une ouverture de drainage par rapport à la paroi inférieure.

12. Récipient de stockage de poissons et de fruits de mer selon l'une quelconque des revendications 1 à 11, dans lequel la paroi du canal intérieur est fixée de manière amovible au récipient.

13. Récipient de stockage de poissons et de fruits de mer selon l'une quelconque des revendications 3 à 12, comprenant en outre un rebord (36) le long du périmètre du couvercle, qui s'étend vers le haut au-dessus de la face du couvercle.

14. Récipient de stockage de poissons et de fruits de mer selon l'une quelconque des revendications 1 à 13, comprenant en outre au moins un trou (56) sur la paroi inférieure du récipient.

15. Récipient de stockage de poissons et de fruits de mer selon l'une quelconque des revendications 1 à 14, comprenant en outre un insert (62, 68) destiné à recevoir les poissons et les fruits de mer, éventuellement dans lequel l'insert est un plateau (68) ou un nid d'abeille (62) .

16. Récipient de stockage de poissons et de fruits de mer selon l'une quelconque des revendications 1 à 15, comprenant en outre des supports d'insert (66).

17. Système de stockage et/ou de transport de poissons et de fruits de mer, comprenant :
un système de transport, le système de transport comprenant :
un véhicule ayant un compartiment de stockage structuré et conçu pour être sélectivement fermé contre son environnement extérieur ;
une couche d'échange thermique dans le compartiment de stockage pour maintenir une température de fonctionnement à l'intérieur du compartiment de stockage ;
un ensemble de pulvérisation structuré et positionné pour pulvériser du liquide dans le compartiment de stockage ;
un moyen pour collecter le liquide pulvérisé et le renvoyer vers l'ensemble de pulvérisation ; et
le récipient de stockage de poissons et de fruits de mer (10) selon l'une quelconque des revendications 1 à 16,
dans lequel le système de stockage et/ou de transport de poissons et de fruits de mer comprend en outre, éventuellement, au moins l'un des éléments suivants : un réservoir de collecte pour stocker le liquide pulvérisé collecté avant de le renvoyer à l'ensemble de pulvérisation ; un biofiltre pour réduire les déchets dans le liquide collecté ; un ventilateur pour aérer le liquide collecté avant la pulvérisation ; et un équipement de régulation de la température du liquide pour réguler la température du liquide avant la pulvérisation.
